# EUROPÄISCHE PATENTSCHRIFT

(11) **EP 2 619 430 B1**
(45) Veröffentlichungstag und Bekanntmachung des Hinweises auf die Patenterteilung: **31.05.2017**
(21) Anmeldenummer: 11757263.6
(22) Anmeldetag: 09.09.2011
(51) Int. Cl.: F02D 25/04, F02D 29/02, F02N 11/08, B61C 5/00

(54) **LOKOMOTIVE MIT HAUPT- UND HILFSENERGIEVERSORGUNG UND EINEM AUTOMATISIERTEN START/STOPP-BETRIEB**
LOCOMOTIVE HAVING A MAIN AND AN AUXILIARY POWER SUPPLY AND AN AUTOMATED START/STOP MODE
LOCOMOTIVE AVEC ALIMENTATION EN ÉNERGIE PRINCIPALE ET AUXILIAIRE ET FONCTIONNEMENT MARCHE/ARRÊT AUTOMATISÉ

(30) Priorität: 21.09.2010 DE 102010041115
(43) Veröffentlichungstag der Anmeldung: 31.07.2013
(73) Patentinhaber: Siemens Aktiengesellschaft, 80333 München (DE)
(72) Erfinder: THULL, Sebastian Roger, 81925 München (DE)
(86) Internationale Anmeldenummer: PCT/EP2011/065630
(87) Internationale Veröffentlichungsnummer: WO 2012/038272

(56) Entgegenhaltungen:
- EP-A1- 1 469 195
- EP-A2- 1 574 706
- EP-A2- 2 101 054
- WO-A1-2009/092157
- CN-Y- 201 130 312
- JP-A- 11 294 177
- JP-A- 58 162 743
- US-A- 5 644 924
- US-A1- 2002 033 157
- US-A1- 2002 189 564
- US-A1- 2006 137 643

## Beschreibung

Die Erfindung betrifft ein Verfahren zum Betreiben einer Lokomotive, bei dem ein Hauptdieselmotor einer Hauptenergieversorgung bedarfsweise abgeschaltet wird, wobei eine Steuerungseinheit den Zustand des Hauptdieselmotors mit Hilfe von Zustandssensoren auf das Vorliegen einer Abschaltbedingung hin überwacht.

Ein solches Verfahren ist aus der US 2004/0099256 A1 bereits bekannt. Dort ist eine Lokomotive beschrieben, die einen Hauptdieselmotor sowie einen Hilfsdieselmotor aufweist. Diese Dieselmotoren dienen jeweils zum Antrieb eines Generators, der für die Lokomotive die jeweils notwendige Traktions- oder Hilfsenergie bereitstellt. Der Hauptdieselmotor kann bei Bedarf beispielsweise bei Stillstand der Lokomotive über eine gewisse Zeitdauer hinweg abgeschaltet werden, wobei die Hilfsenergieversorgung die Energieversorgung der Hilfsbetriebekomponenten übernimmt, die auch bei Stillstand mit Energie versorgt werden müssen. Zum Starten und Abschalten des Hilfsbeziehungsweise Hauptdieselmotors ist eine zweckmäßige Steuerungseinheit vorgesehen. Auf diese Weise kann Energie eingespart werden. Hierbei kommt es auch zu einer herabgesetzten Umweltbelastung in Folge der bei der Dieselverbrennung entstehenden Abgasprodukte.

Es sind ferner Lokomotiven bekannt, bei denen zur Energieversorgung bei abgeschaltetem Hauptdieselmotor eine Hilfsenergieversorgung zum Einsatz gelangt, die eine Brennstoffzelle aufweist. Die Brennstoffzelle versorgt bei Stillstand des Schienenfahrzeugs Lasten wie Klimaanlagen, Scheibenwischer, Kühlanlagen oder dergleichen mit elektrischer Energie.

Bei einem Fahrzeug mit Großdieselmotor wie im weiteren Text anhand einer Lokomotive beschrieben, kann jedoch ein Hauptdieselmotor nicht einfach abgestellt werden. Hintergrund ist, dass ein solcher Hauptdieselmotor so groß dimensioniert ist, dass zum Runter- oder Hochfahren eine wesentlich längere Zeitdauer erforderlich ist als bei einem Dieselmotor, der in Kraftfahrzeugen einschließlich Lastkraftwagen eingesetzt wird. Darüber hinaus müssen bei einem sofortigen Abstellen des Hauptdieselmotors Fahrmotoren oder andere Traktionskomponenten des Schienenfahrzeugs nachgekühlt werden. Dieser Kühlungsprozess erfordert jedoch einen hohen Energieaufwand, der von der Hilfsenergieversorgung nicht lange allein aufgebracht werden kann.

Die Offenlegungsschrift US 2002/033157 A1 zeigt ein System und ein Verfahren zum Steuern einer Verbrennungsmaschine.

Die Patentschrift US 5 644 924 A zeigt ein Steuersystem für eine Hauptmaschine eines Fahrzeugs.

Die Offenlegungsschrift US 2006/137643 A1 zeigt eine Steuerung für eine Fahrzeugmaschine umfassend eine automatische Start- und Stoppfunktion.

Die Offenlegungsschrift EP 1 469 195 A1 zeigt ein Verfahren zum automatischen Abschalten einer Brennkraftmaschine.

Die Offenlegungsschrift EP 1 576 706 A2 zeigt eine Vorrichtung zum Anzeigen eines Halts einer Maschine.

Die Offenlegungsschrift JP 58 162743 A zeigt eine Steuerung zum Starten und Stoppen einer Fahrzeugmaschine.

Die Offenlegungsschrift WO 2007/092157 A1 zeigt ein Abschaltsystem eines Fahrzeugs.

Die Offenlegungsschrift EP 2 101 054 A2 zeigt ein Verfahren zum automatischen Einstellen einer Geschwindigkeit einer Maschine eines Fahrzeugs.

Die Offenlegungsschrift JP 11 294177 A zeigt ein Fahrzeug mit einer Haupt- und einer Hilfsmaschine.

Die Offenlegungsschrift CN 2011130312 Y zeigt ein Energiesteuergerät umfassend eine Hauptenergieversorgung und eine Hilfsenergieversorgung.

Den bisher bekannten Verfahren haftet der Nachteil, dass insbesondere bei automatischen Abschaltverfahren des Hauptdieselmotors der Hauptdieselmotor bereits nach kurzen Stillstandzeiten des Schienenfahrzeugs wieder eingeschaltet werden muss mit einer hohen Belastung des Starters des Hauptdieselmotors im Gefolge.

Aufgabe ist es daher, ein Verfahren der eingangs genannten Art bereitzustellen, mit dem ein häufiges und insbesondere unnötiges Abschalten des Hauptdieselmotors vermieden werden kann.

Die Erfindung löst diese Aufgabe durch die Merkmale des Verfahrens nach Anspruch 1.

Erfindungsgemäß wird der Hauptdieselmotor beispielsweise bei Stillstand der Lokomotive oder des Schienenfahrzeugs so lange betrieben, bis eine Abschaltbedingung vorliegt. Diese Abschaltbedingung kann beispielsweise dann erfüllt sein, wenn Antriebskomponenten der Lokomotive, beispielsweise Elektromotoren, Stromrichter oder dergleichen, ausreichend abgekühlt sind, so dass eine wie auch immer gestaltete Hilfsenergieversorgung nicht mehr mit der Kühlung dieser Komponenten belastet zu werden braucht. Anschließend wird ein Hinweissignal abgesetzt, das beispielsweise im Führerstand einer Lokomotive über zweckmäßige Anzeigeelemente, beispielsweise über einen Bildschirm, in Gestalt eines ablaufenden Balkens angezeigt wird.

Erfindungsgemäß vergeht nach dem Absetzen des Hinweises eine Eingriffszeitdauer, deren Ablaufen beispielsweise durch immer kürzer werdenden Balken visualisiert wird. Innerhalb dieser Eingriffszeitdauer hat der Lokomotivführer oder eine Steuerkomponente der Lokomotive die Möglichkeit, ein Abschalten des Hauptdieselmotors zu verhindern, wenn beispielsweise absehbar ist, dass die Fahrt alsbald fortgesetzt werden wird, so dass ein Abschalten des Dieselmotors eher nachteilig wäre. Aus diesem Grunde ist eine Abschaltunterbrechungseinheit vorgesehen, mit der ein Abschalten des Hauptdieselmotors verhindert werden kann. Die Abschaltunterbrechungseinheit kann beispielsweise vom Lokomotivführer oder einer Steuerkomponente der Lokomotive betätigt werden. Auf diese Art und Weise ist ein häufiges Abschalten insbesondere bei kurzen Stillstandszeiten vermieden.

Alternativ hierzu wird der Hauptdieselmotor nach Erhalt des Hinweises aktiv heruntergefahren. Hierzu ist beispielsweise ein Tastendruck ausreichend.

Erfindungsgemäß verstreicht zwischen Absetzen des Hinweissignals und dem Abstellen des Hauptdieselmotors eine zuvor festgelegte Eingriffszeitdauer, die so lang gewählt ist, dass ein Abbrechen des Abschaltvorganges von Hand ermöglicht ist. Die Eingriffszeitdauer beträgt beispielsweise 30 Sekunden. Innerhalb dieser 30 Sekunden kann beispielsweise ein Lokomotivführer bequem das Abstellen des Dieselmotors verhindern.

Zweckmäßigerweise wird das Ablaufen der Eingriffszeitdauer in einem Führerhaus der Lokomotive auf einem Anzeigegerät angezeigt. Mit dieser vorteilhaften Weiterentwicklung ist eine bequeme Überwachung der Eingriffszeitdauer ermöglicht. Die Darstellung kann beispielsweise auf einem zentralen Bildschirm des Führerstandes angezeigt werden.

Erfindungsgemäß wird vor dem Abschalten des Hauptdieselmotors ein Hilfsdieselmotor einer Hilfsenergieversorgung eingeschaltet. Dadurch ist somit eine Hilfsenergieversorgung bereitgestellt, die beispielsweise im Stillstand der Lokomotive oder des Schienenfahrzeugs die Energieversorgung der Hilfsbetriebelasten übernimmt. Um eine kontinuierliche Energieversorgung bereitzustellen, ist es notwendig, dass der Hilfsdieselmotor vor dem Abschalten des Hauptdieselmotors zunächst seinen Normalbetriebszustand erreicht, in welcher er die notwendige elektrische Leistung für die Energieversorgung bereitstellen kann. Aus diesem Grunde wird vor dem Ausstellen des Hauptdieselmotors der Hilfsdieselmotor eingeschaltet. Dies erfolgt erfindungsgemäß nach Ablauf der Eingriffszeitdauer, da ansonsten bei einer Fortsetzung der Fahrt und einem Eingriff des Lokomotivführers in das Abschaltverfahren der Hilfsdieselmotor umsonst gestartet worden wäre.

Zweckmäßigerweise wird nach dem Einschalten des Hilfsdieselmotors eine Hochfahrzeitdauer abgewartet, in welcher der Hilfsdieselmotor nach dem Einschalten seinen vordefinierten Betriebszustand erreicht. Anschließend wird die Hauptenergieversorgung von einem Hilfsenergieversorgungsnetzzweig der Lokomotive getrennt und die Hilfsenergieversorgung mit dem Hilfsenergieversorgungsnetzzweig verbunden, wobei an dem Hilfsenergieversorgungsnetzzweig nur Hilfsbetriebekomponenten mit einem Energieverbrauch angeschlossen sind, der geringer ist als derjenige der restlichen Hilfsbetriebekomponenten, die nicht mit dem Hilfsenergieversorgungszweig verbunden sind. Gemäß dieser vorteilhaften Weiterentwicklung der Erfindung werden nur Teile des gesamten Hilfsenergieverteilungsnetzes der Lokomotive, das beispielsweise durch eine einzige Sammelschiene realisiert ist, mit der Hilfsenergieversorgung verbunden. Sämtliche Komponenten, die für die Kühlung von Umrichtern und Elektromotoren der Traktion der Lokomotive oder des Schienenfahrzeugs verantwortlich sind, sind von dem Hilfsenergieversorgungsnetzzweig der Lokomotive getrennt, bevor die Hilfsenergieversorgung auf den Sammelschienenzweig aufgeschaltet wird.

Zweckmäßigerweise wird bei abgeschalteter Hauptenergieversorgung der Hauptdieselmotor nach Empfang eines Fahrtfortsetzungssignals gestartet, nach Verstreichen einer Hochfahrzeitdauer, in welcher der Hauptdieselmotor einen zuvor festgelegten Betriebszustand erreicht, die Hauptenergieversorgung mit dem Hilfsenergieversorgungsnetzzweig verbunden und die Hilfsenergieversorgung von dem gesamten Hilfsenergieversorgungsnetz getrennt und schließlich der Hilfsdieselmotor abgestellt. Gemäß dieser Ausgestaltung des erfindungsgemäßen Verfahrens hat der Fahrzeugführer bei einem Halt im Energiesparmodus, also bei abgeschaltetem Hautdieselmotor, die Möglichkeit, über ein Eingabefeld wieder automatisiert in den Fahrbetrieb überzugehen. Erhält er ein entsprechendes Signal zum Weiterfahren, drückt er das Eingabefeld zum Starten des Hauptdieselmotors. Nun fährt die Steuerungseinheit den Hauptdieselmotor herauf und den Hilfsdieselmotor herunter. Ist der Hauptdieselmotor in seinem Normalbetriebszustand, wird die Hauptenergieversorgung mit den Komponenten verbunden, die zuvor von dem Hilfsenergieversorgungszweig mit elektrischer Leistung versorgt wurden. Die Hauptenergieversorgung übernimmt die Versorgung sämtlicher Lasten einschließlich der Traktion.

Zweckmäßigerweise wird nach dem Verbinden der Hauptenergieversorgung mit dem gesamten Hilfsenergieverteilungsnetz der Lokomotive ein Hinweissignal von der Steuerungseinheit abgesetzt und in einem Führerstand der Lokomotive angezeigt, dass die Fahrt fortgesetzt werden kann. Auf diese Art und Weise ist das Hochfahren und Aufschalten der Hauptenergieversorgung weitestgehend automatisiert.

Es sei nochmals darauf hingewiesen, dass der Hinweis oder das Hinweissignal ein positives oder ein negatives Hinweissignal sein kann. Bei einem negativen Hinweissignal wird der Eintritt eines bestimmten Ereignisses bekannt gegeben. Mit andern Worten wird ein Countdown gesetzt und beispielsweise dem Fahrzeugführer in Gestalt des Hinweises mitgeteilt. Der Countdown lässt sich wie weiter oben beschrieben beispielsweise durch ein der Zeit immer kleiner werden Balken visualisieren. Unterbricht der Zugführer oder eine Steuerkomponente den Countdown durch die Abschaltunterbrechungseinheit nicht, fährt die Steuerungseinheit den Hauptdieselmotor selbsttätig herunter.

Bei einem positiven Hinweissignal wird auf Grund einer Auslösung, z.B. in Folge eines Tastendruckes, aktiv der Übergang in den Energiesparmodus herbeigeführt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- FIG 1: eine beispielhafte Auslegung für eine Haupt- und Hilfsenergieversorgung einer Lokomotive und
- FIG 2: den Ablauf eines Ausführungsbeispiels des erfindungsgemäßen Verfahrens schematisch verdeutlicht.

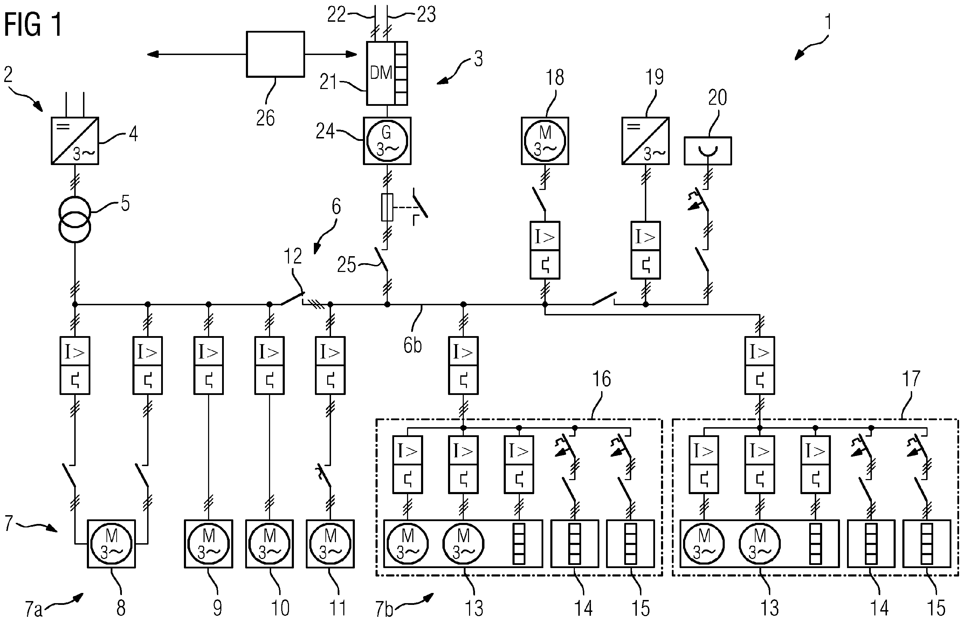

FIG 1 zeigt ein Schaltungsbild einer beispielhaften Energieversorgung 1, mit der das erfindungsgemäße Verfahren durchführbar ist. Die Energieversorgung 1 ist für eine figürlich nicht dargestellte Lokomotive vorgesehen und zeigt Teile einer Hauptenergieversorgung 2 sowie einer Hilfsenergieversorgung 3. Die Hauptenergieversorgung 2 ist nur teilweise und zwar nur mit solchen ihrer Komponenten dargestellt, die zur Energieversorgung eines Hilfsenergieversorgungsnetzes 6 erforderlich sind. Dieser Teil der Hauptenergieversorgung umfasst einen Hilfsbetriebeumrichter 4, der über einen Transformator 5 mit dem Hilfsenergieversorgungsnetz 6 in Gestalt einer Hilfsbetriebesammelschiene 6 verbunden ist. Die Hauptenergieversorgung 2 weist ferner nicht gezeigte Traktionsumrichter auf, die zum Antrieb von ebenfalls nicht dargestellten Fahrmotoren verbunden ist, welche die Lokomotive antreiben. Darüber hinaus verfügt die Hauptenergieversorgung 2 über weitere Umrichter, die bei Fahrbetrieb als Gleichrichter betrieben werden und mit einem ebenfalls nicht gezeigten Hauptgenerator verbunden sind. Der Hauptgenerator steht wiederum mit einem Hauptdieselmotor in Verbindung, der bei Normalbetrieb der Lokomotive die gesamte Energieversorgung der Lokomotive bereitstellt. Der Hauptdieselmotor ist entsprechend groß dimensioniert.

Neben den Traktions- oder Antriebskomponenten weist die Lokomotive Hilfsbetriebskomponenten 7 auf, die mit dem Hilfsenergieversorgungsnetz 6 verbunden und als Hilfsbetriebskomponenten 7 bezeichnet sind. Sie umfassen insbesondere Fahrmotor- und Stromrichterlüfter 8, eine Stromrichterwasserpumpe 9, ein Innenraumlüfterstromrichter 10 sowie einen Kompressor 11 für die Bremsanlage. Die Fahrmotorstromrichterlüfter 8, die Stromrichterwasserpumpe und der Innenraumlüfterstromrichter 10 können durch einen Trennschalter 12 von der Hilfsenergieversorgung 3 getrennt werden. Die Komponenten 7b der Hilfsbetriebekomponenten 7 mit geringem Energieverbrauch, also die eine Klimaanlage 13, eine Frontscheibenheizung 14, eine Fußbodenheizung 15 im ersten Führerstand 16 sowie die gleichen Komponenten in einem zweiten Führerstand 17 ein Bremswiderstandslüfter 18, ein Batterieladegerät 19 sowie Komponenten der Fremdeinspeisung 20, sind dann lediglich mit einem Hilfsenergieversorgungszweig 6b verbunden. Die restlichen Hilfsbetriebekomponenten 7a, also die Komponente der Traktionskühlung, weisen einen vergleichsweise höheren Energiebedarf auf und sind von dem Hilfsenergieversorgungszweig getrennt.

Die Hilfsenergieversorgung 3 umfasst einen Hilfsdieselmotor 21, der durch einen nicht gezeigten Starter oder eine nicht gezeigte Batterie, die über die Startleitungen 22 und 23 angeschlossen sind, gestartet werden kann. Der Hilfsdieselmotor 21 ist wesentlich kleiner als der Hauptdieselmotor der Hauptenergieversorgung 2 ausgebildet. Er verbraucht dadurch wesentlich weniger Energie als der Hauptdieselmotor und gibt entsprechend weniger Abgase in die Atmosphäre ab. Der Hilfsdieselmotor 21 ist mit einem Hilfsgenerator 24 verbunden, der für die Hilfsenergiekomponenten 7 die notwendige elektrische Energie in Form einer Wechselspannung bereitstellt.

Es sei noch einmal darauf hingewiesen, dass die Hilfsbetriebelasten 7, 9 und 10, die der Kühlung des Fahrmotors sowie der Stromrichter dienen, von den restlichen Hilfsbetriebekomponenten 7 durch den Trennschalter 12 getrennt werden können. Die besagten Komponenten verbrauchen mehr Energie als die verbleibende Hilfsbetriebekomponente 7b. Aufgrund ihres Abtrennens von der Hilfsenergieversorgung, kann der Hilfsdieselmotor 3 ohne erneutes Zuschalten des Hauptdieselmotors auch über längere Zeiträume hinweg die Versorgung der Hilfsbetriebekomponenten übernehmen.

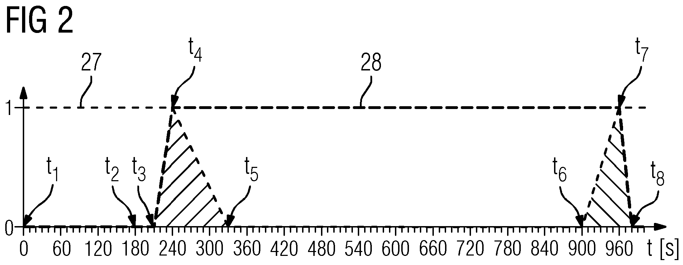

FIG 2 verdeutlicht schematisch ein Ausführungsbeispiel des erfindungsgemäßen Verfahrens. Hierzu ist Zwei-Koordinaten-Diagramm dargestellt, wobei auf der Abszisse die Zeit t in Sekunden und auf der Ordinate t zwei Zustände 0 und 1 dargestellt sind. Dabei bedeutet der Zustand 0, dass der jeweilige Dieselmotor der Hauptenergieversorgung 2 oder der Hilfsenergieversorgung 3 abgeschaltet sind, wohingegen der jeweilige Dieselmotor im Zustand 1 sich in seinem Normalbetriebszustand befindet. Der Verlauf des Zustandes des Hauptdieselmotors ist mit dem Bezugszeichen 27 versehen. Der Zustand des Hilfsdieselmotors ist mit dem Bezugszeichen 28 referenziert.

Im Zeitpunkt 1 kommt die Lokomotive zum Stehen, wobei der Hauptdieselmotor im Leerlauf weiterläuft und die Lokomotive bei abgeschaltetem Hauptdieselmotor weiter mit Energie versorgt, bis die Fahrmotor- und Stromrichterlüfter 8, die Stromrichterwasserpumpe 9 und der Innenraumlüfter 10 der Stromrichter soweit heruntergekühlt sind, dass eine weitere Kühlung bei Stillstand der Lokomotive nicht mehr notwendig ist.

Dieser Zustand wird im Zeitpunkt t2 erreicht, der in der FIG 1 bei etwa 180 Sekunden liegt. In diesem Zeitpunkt t2 erhält der Lokführer einen Hinweis, dass die Fahrmotoren und Stromrichter heruntergekühlt sind und dass in 30 s das Einleiten des Energiesparmodus beginnt. Dieses Ereignis ist mit dem Zeitpunkt t3 bezeichnet. Bis zu diesem Zeitpunkt t4 hat der Lokomotivführer nun die Möglichkeit, das Abschalten des Hauptdieselmotors zu verhindern. Im Zeitpunkt t3 wird der Hilfsdieselmotor 21 gestartet. Im Zeitpunkt t4 erreicht der Hilfsdieselmotor 21 seinen Normalbetriebszustand. Der in FIG 1 mit dem Bezugszeichen 12 bezeichnete Trennschalter wird nun in seine Trennstellung gefahren. Mit anderen Worten wird die Hauptenergieversorgung 2 von den Hilfsenergiekomponenten 7b des Hilfsenergieversorgungszweiges 6b abgetrennt. Im gleichen Zeitpunkt t4 wird die Hilfsenergieversorgung 3 mit Hilfe des Schalters 25 mit dem Hilfsversorgungszweig 6b verbunden. Ferner wird der Hauptdieselmotor abgeschaltet, der jedoch bis zum Zeitpunkt t5 nachläuft. Erst im Zeitpunkt t5 ist der Hauptdieselmotor vollständig ausgeschaltet. Zwischen den Zeitpunkten t3 und t5 laufen somit Hauptdieselmotor und Hilfsdieselmotor 21 zeitgleich. Dieser Bereich ist daher schraffiert dargestellt. Im Zeitpunkt t6 bekommt die Lokomotive das Signal zur Weiterfahrt. Der Hauptdieselmotor wird zum Zeitpunkt t6 eingeschaltet. Im Zeitpunkt t7 hat der Hauptdieselmotor 7 seinen Normalbetriebszustand erreicht. Ferner wird der Schalter 25 in seine Trennstellung überführt und somit die Hauptenergieversorgung 3 von der Hilfsbetriebesammelschiene 6 abgekoppelt. Ferner wird der Schalter 12 geschlossen und die gesamte Lokomotive wieder von dem Hauptdieselmotor mit Energie versorgt. Die Fahrt kann nun fortgesetzt werden. Im Zeitpunkt t8 ist der Nachlauf des Hilfsdieselmotors 21 beendet.

## Patentansprüche

1. Verfahren zum Betreiben einer Lokomotive mit Hauptdieselmotor, bei dem ein Hauptdieselmotor einer Hauptenergieversorgung (2) bedarfsweise abgeschaltet wird, wobei eine Steuerungseinheit (26) den Zustand des Hauptdieselmotors mit Hilfe von Zustandssensoren auf das Vorliegen einer Abschaltbedingung hin überwacht, wobei
die Steuerungseinheit (26) nach Vorliegen der Abschaltbedingung ein Hinweissignal absetzt, bevor der Hauptdieselmotor abgestellt wird, **dadurch gekennzeichnet, dass** vor dem Abschalten des Hauptdieselmotors ein Hilfsdieselmotor (21) einer Hilfsenergieversorgung (3) eingeschaltet wird, wobei zwischen dem Absetzen des Hinweissignals und dem Abstellen des Hauptdieselmotors eine zuvor festgelegte Eingriffszeitdauer verstreicht, die so lang ist, dass ein Abbrechen des Abschaltevorgangs von Hand ermöglicht ist, wobei der Hilfsdieselmotor (21) nach Ablauf der Eingriffszeitdauer eingeschaltet wird.

2. Verfahren nach Anspruch 1,
**dadurch gekennzeichnet, dass** das Ablaufen der Eingriffszeitdauer in einem Führerhaus (16, 17) der des Fahrzeugs auf einem Anzeigegerät angezeigt wird.

3. Verfahren nach Anspruch 1 oder 2,
**dadurch gekennzeichnet, dass** nach Einschalten des Hilfsdieselmotors (21) eine Hochfahrzeitdauer abgewartet wird, in welcher der Hilfsdieselmotor (21) nach dem Einschalten seinen vordefinierten Betriebszustand erreicht, anschließend die Hauptenergieversorgung (2) von einem Hilfsenergieversorgungsnetzzweig (6b) des Fahrzeugs getrennt und die Hilfsenergieversorgungsnetzzweig (6b) mit dem Hilfsenergieversorgungsnetz (6) verbunden wird, wobei an dem Hilfsenergieversorgungsnetzzweig (6b) nur solche Hilfsbetriebekomponenten angeschlossen sind, die nicht zur Kühlung von Traktionskomponenten dienen.

4. Verfahren nach einem der vorhergehenden Ansprüche,
**dadurch gekennzeichnet, dass** bei abgeschalteter Hauptenergieversorgung (2) der Hauptdieselmotor nach Empfang eines Fahrtfortsetzensignals gestartet wird, nach Verstreichen einer Hochfahrzeitdauer, in welcher der Hauptdieselmotor einen zuvor festgelegten Betriebszustand erreicht, die Hauptenergieversorgung (2) mit dem Hilfsenergieversorgungsnetzzweig (6b) verbunden, die Hilfsenergieversorgung (3) von dem gesamten Hilfsenergieversorgungsnetz (6) getrennt und schließlich der Hilfsdieselmotor (21) abgestellt wird.

5. Verfahren nach Anspruch 4,
**dadurch gekennzeichnet, dass** nach dem Verbinden der Hauptenergieversorgung (2) mit dem gesamten Hilfsenergieversorgungsnetz ein Hinweissignal abgesetzt und in einem Führerstand (16, 17) oder des Fahrzeugs angezeigt wird, dass die Fahrt fortgesetzt werden kann.

## Claims

1. Method for operating a locomotive having a main diesel motor, in which a main diesel motor of a main power supply (2) is switched off if required, wherein a control unit (26) monitors the status of the main diesel motor for the presence of a switch-off condition with the aid of status sensors, wherein
the control unit (26) issues a notification signal following the presence of the switch-off condition, before the main diesel motor is shut off, **characterised in that**, prior to the switching-off of the main diesel motor, an auxiliary diesel motor (21) of an auxiliary power supply (3) is switched on, wherein a previously defined intervention time period passes between the issuance of the notification signal and the shutoff of the main diesel motor, which is long enough that a manual cancellation of the switching off procedure is made possible, wherein the auxiliary diesel motor (21) is switched on after the intervention time period has elapsed.

2. Method according to claim 1,
**characterised in that**
the elapsing of the intervention time period is displayed on a display device in a driver's cab (16, 17) of the vehicle.

3. Method according to claim 1 or 2,
**characterised in that**,
following the switching-on of the auxiliary diesel motor (21), a start-up time period is waited, in which the auxiliary diesel motor (21), after the switching-on, reaches its predetermined operating status, subsequently the main power supply (2) is disconnected from an auxiliary power supply network branch (6b) of the vehicle and the auxiliary power supply network branch (6b) is coupled to the auxiliary power supply network (6), wherein only those auxiliary operating components, which are not used for cooling of traction components, are connected to the auxiliary power supply network branch (6b).

4. Method according to one of the preceding claims, **characterised in that**,
when the main power supply (2) is switched off, the main diesel motor is started following receipt of a continue journey signal, after a start-up time period has passed, in which the main diesel motor reaches a previously defined operating status, the main power supply (2) is coupled to the auxiliary power supply network branch (6b), the main power supply (3) is disconnected from the overall auxiliary power supply network (6) and finally the auxiliary diesel motor (21) is shut off.

5. Method according to claim 4,
**characterised in that**,
following the coupling of the main power supply (2) to the overall auxiliary power supply network, a notification signal that the journey can be continued is issued and displayed in a driver's cab (16, 17) or the vehicle,

## Revendications

1. Procédé pour faire fonctionner une locomotive à moteur diesel principal, dans lequel on déconnecte, suivant les besoins, un moteur diesel principal d'une alimentation ( 2 ) en énergie principale, une unité ( 26 ) de commande contrôlant, sur la présence d'une condition de déconnexion, l'état du moteur diesel principal, à l'aide de capteurs d'état, dans lequel
l'unité ( 26 ) de commande émet, en présence de la condition de déconnexion, un signal indicateur, avant que le moteur diesel principal soit arrêté, **caractérisé en ce qu'**avant la déconnexion du moteur diesel principal, on connecte un moteur ( 21 ) diesel auxiliaire à une alimentation ( 3 ) en énergie auxiliaire, dans lequel, entre l'émission du signal indicateur et l'arrêt du moteur diesel principal, s'étend une durée d'intervention fixée à l'avance, qui est si longue qu'une interruption de l'opération de déconnexion est possible à la main, le moteur ( 21 ) diesel auxiliaire étant connecté après l'expiration de la durée d'intervention.

2. Procédé suivant la revendication 1,
**caractérisé en ce que**
l'on indique l'expiration de la durée d'intervention sur un appareil d'affichage dans un poste ( 16, 17 ) de conduite du véhicule.

3. Procédé suivant la revendication 1 ou 2,
**caractérisé en ce qu'**
après avoir connecté le moteur ( 21 ) diesel auxiliaire, on attend une durée de montée en régime, dans laquelle le moteur ( 21 ) diesel auxiliaire atteint, après la connexion, son état de fonctionnement défini à l'avance, on sépare ensuite l'alimentation ( 2 ) en énergie principale d'une branche ( 6b ) de réseau d'alimentation en énergie auxiliaire du véhicule et on relie la branche ( 6b ) de réseau d'alimentation en énergie auxiliaire au réseau ( 6 ) d'alimentation en énergie auxiliaire, dans lequel ne sont raccordés à la branche ( 6b ) de réseau d'alimentation en énergie auxiliaire, que des composants de fonctionnement auxiliaires, qui ne servent pas au refroidissement de composants de traction.

4. Procédé suivant l'une des revendications précédentes,
**caractérisé en ce que**
lorsque l'alimentation ( 2 ) en énergie principale est déconnectée, on démarre le moteur diesel principal, après la réception d'un signal de continuation de la marche, après qu'une durée de montée en régime s'est écoulée, dans laquelle le moteur diesel principal atteint un état de fonctionnement fixé à l'avance, on relie l'alimentation ( 2 ) en énergie principale à la branche ( 6b ) de réseau d'alimentation en énergie auxiliaire, on sépare l'alimentation ( 3 ) en énergie auxiliaire de tout le réseau ( 6 ) d'alimentation en énergie auxiliaire et, finalement, on arrête le moteur ( 21 ) diesel auxiliaire.

5. Procédé suivant la revendication 4,
**caractérisé en ce qu'**
après la liaison de l'alimentation ( 2 ) en énergie principale à tout le réseau d'alimentation en énergie auxiliaire, on émet un signal indicateur et on affiche, dans un poste ( 16, 17 ) de conduite du véhicule, que la marche peut se poursuivre.
